# EUROPÄISCHE PATENTSCHRIFT

(11) **EP 3 083 207 B1**
(45) Veröffentlichungstag und Bekanntmachung des Hinweises auf die Patenterteilung: **01.05.2019**
(21) Anmeldenummer: 14833113.5
(22) Anmeldetag: 09.12.2014
(51) Int. Cl.: B29C 67/00, B22F 3/105

(54) **3D-DRUCKVERFAHREN MIT SCHNELLTROCKENSCHRITT**
3D PRINTING METHOD WITH RAPID DRYING STEP
PROCÉDÉ D'IMPRESSION 3D À ÉTAPE DE SÉCHAGE RAPIDE

(30) Priorität: 18.12.2013 DE 102013021091
(43) Veröffentlichungstag der Anmeldung: 26.10.2016
(73) Patentinhaber: Voxeljet AG, 86316 Friedberg (DE)
(72) Erfinder: GÜNTHER, Daniel, 81371 München (DE); GÜNTHER, Johannes, 81371 München (DE)
(74) Vertreter: Helbig, Christian
(86) Internationale Anmeldenummer: PCT/DE2014/000624
(87) Internationale Veröffentlichungsnummer: WO 2015/090265

(56) Entgegenhaltungen:
- EP-A1- 2 261 009
- EP-B1- 0 431 924
- WO-A2-98/28124
- WO-A2-2005/097476
- DE-A1-102011 053 205
- US-A1- 2007 126 157

## Beschreibung

Die Erfindung betrifft ein Verfahren zum Herstellen dreidimensionaler Modelle unter Verwendung einer gesteuerten Luftströmung sowie damit hergestellte Modelle.

In der europäischen Patentschrift EP 0 431 924 B1 wird ein Verfahren zur Herstellung dreidimensionaler Objekte (Modelle, Bauteile, 3D-Formteile) aus Computerdaten beschrieben. Dabei wird ein Partikelmaterial in einer dünnen Schicht auf eine Plattform aufgetragen und dieses selektiv mittels eines Druckkopfes mit einem Bindermaterial bedruckt. Der mit dem Binder bedruckte Partikelbereich verklebt und verfestigt sich unter dem Einfluss des Binders und gegebenenfalls eines zusätzlichen Härters. Anschließend wir die Plattform um eine Schichtdicke in einen Bauzylinder abgesenkt und mit einer neuen Schicht Partikelmaterial versehen, die ebenfalls, wie oben beschrieben, bedruckt wird. Diese Schritte werden wiederholt, bis eine gewisse, erwünschte Höhe des Objektes erreicht ist. Aus den bedruckten und verfestigten Bereichen entsteht so ein dreidimensionales Objekt. Dieses aus verfestigtem Partikelmaterial hergestellte Objekt ist nach seiner Fertigstellung in losem Partikelmaterial eingebettet und wird anschließend davon befreit. Dies erfolgt beispielsweise mittels eines Saugers. Übrig bleiben danach die gewünschten Objekte, die dann von Pulveranhaftungen z.B. durch händisches Abbürsten befreit werden.

Das 3D-Drucken auf Basis pulverförmiger Werkstoffe und Eintrag flüssiger Binder ist unter den Schichtbautechniken das schnellste Verfahren.

Mit diesem Verfahren lassen sich verschiedene Partikelmaterialien, dazu zählen - nicht erschöpfend - natürliche biologische Rohstoffe, polymere Kunststoffe, Metalle, Keramiken und Sande, verarbeiten.

Als Bindesystem oder Binder kann z.B. ein Feststoff im Partikelmaterial (Baumaterial) oder in einer Binderflüssigkeit (Lösemittel) dienen. Dieser wird durch ein aus dem Tintenstrahldruckkopf ausgestoßenes Lösemittel (im Folgenden auch als Binderflüssigkeit bezeichnet) in Lösung gebracht bzw. die Binderflüssigkeit umfassend einen Feststoff wird selektiv aufgebracht. Nach dem Verflüchtigen des Lösemittels (Binderflüssigkeit) haften die Partikel an den gewünschten Stellen zusammen und formen so ein Bauteil im Baumaterial. Das Bauteil kann aus dem restlichen losen Partikelmaterial nach einer gewissen Wartezeit entnommen werden.

Diese Wartezeit ist im Allgemeinen lang, da das Lösemittel von dem gelösten Material nur langsam wieder freigegeben wird. Zudem muss der Dampfdruck des Lösemittels relativ gering sein, da ansonsten die Verdruckbarkeit mit einem Tintenstrahldruckkopf nicht gegeben ist.

Die jeweiligen Wartezeiten hängen stark vom Weg des Flüssigkeitsdampfes im aufgebrachten Baumaterial vom Bauteil bis zur Baumaterialoberfläche (Pulverkuchenoberfläche) ab. Hierbei sind die Maschinendimensionen entscheidend. Die Trockenzeit d.h. die Zeit, in der das Lösemittel aus dem Baumaterial entweicht, entwickelt sich dabei nicht linear mit der Entfernung. Bei sehr großen Bauräumen werden die Teile unter Umständen nicht in endlicher Zeit trocken.

Daraus ergibt sich der Nachteil, dass trotz langer Wartezeiten die Bauteile nach dem Entpacken oft instabil sind und in gewissem Umfang plastisch. Die Verflüchtigung des Lösemittels erzeugt zudem gewisse Anhaftungen am Bauteil, die nach dem Entpacken in Handarbeit entfernt werden müssen.

Das Lösemittel für den genannten Druckprozess sollte im Allgemeinen einen relativ niedrigen Dampfdruck aufweisen. Höhere, für den Trockenprozess aber wünschenswerte, Dampfdrücke stören den Tintenstrahldruckkopf bei der Tropfenerzeugung.

Zusätze zum Lösemittel sind beim Trockenprozess ebenso hinderlich, da sie die Abdampfrate maßgeblich beeinflussen. Eine Anpassung der Viskosität des Lösemittels für den Tintenstrahldruckprozess ist damit oft nicht möglich.

Eine Möglichkeit die langen Wartezeiten bis zum Auspacken der Teile zu verkürzen, ist der Einsatz von Bindesystemen, die trotz unvollständiger Austrocknung ausreichende Festigkeit bieten. Dieses Vorgehen stellt allerdings eine deutliche Beschränkung bzgl. der Materialsysteme dar. Nur eine kleine Gruppe von Stoffen erfüllt dieses Kriterium.

Eine weitere Möglichkeit ist die Verwendung eines Systems, das chemisch zu einer Verfestigung der eingedruckten Flüssigkeit führt und dadurch die Bindung der Partikel realisiert. Dabei werden die Komponenten des Systems nach Möglichkeit getrennt im System vorgehalten. Erst beim Druckprozess kommt es zu der gewünschten Verfestigungsreaktion. Ein Beispiel für ein solches System kann ein als Kaltharzprozess bekanntes Verfahren sein. Dabei wird ein mit Säure umhüllter Sand mit Furfurylalkohol in Kontakt gebracht. Dadurch kommt es zu einer chemischen Reaktion die die vormals flüssigen Komponenten in einen vernetzten Kunststoff übergehen lassen.

Diese Systeme reduzieren die Wartezeit bis zum Auspacken der Teile deutlich. Dennoch stellen die zum Einsatz kommenden Monomere für den Druckkopf eine Gefahr dar. Oft sind die Monomere für derartige Prozesse in der Aggressivität mit Lösemitteln vergleichbar. Die quasi latent vorhandenen vernetzten Kunststoffe stellen permanent ein Risiko für den Druckkopf dar, da sie jederzeit durch Verschmutzungen oder unerwünschte Katalysereaktionen verfestigen und damit den Druckkopf beschädigen können.

Die beschriebenen Ansätze die Wartezeit im Verfahrensprozess zu verkürzen weisen somit verschiedene Nachteile und Probleme auf.

Somit besteht seit langem das Bedürfnis ein 3D-Druckverfahren bereit zu stellen, in dem die Wartezeiten zum Entfernen bzw. Trocknen vermindert werden können und damit ein schnelleres Herstellungsverfahren erzielt wird.

Auch besteht das Bedürfnis den Entpackvorgang zu vereinfachen und somit die Modellherstellung zu beschleunigen, indem zusätzliche Arbeitsgänge vermieden werden wie das händische Entfernen von Anhaftungen am Bauteil.

Weiterhin soll das hergestellte Modell so stabil sein, dass es leicht zu entpacken ist und das Entpacken nicht durch ein plastisches oder zu plastisches Modell (Bauteil) behindert oder verlangsamt wird oder gar dadurch Qualitätsnachteile entstehen. Die EP2261009 offenbart eine Vorrichtung zum Herstellen dreidimensionaler Modelle mittels Schichtaufbautechnik mit Mittel zur Erzeugung einer Luftströmung.

Eine Aufgabe der vorliegenden Erfindung ist es damit den Widerspruch zwischen kurzer Trockenzeit der Bauteile nach dem Gesamtbauprozess und der Verdruckbarkeit der Binderflüssigkeit mit einem Tintenstrahldruckkopf zu lösen.

Weiterhin ist es eine Aufgabe der vorliegenden Erfindung ein 3D-Druckverfahren bereitzustellen, mit dem die Trocknungszeiten der Binderflüssigkeit verkürzt werden können und somit eine höhere Verfahrensgeschwindigkeit erzielt werden kann.

Eine weitere Aufgabe der vorliegenden Erfindung ist es die Nachteile des Standes der Technik zumindest teilweise oder ganz zu vermeiden.

### Ausführliche Beschreibung der Erfindung

Im Folgenden werden einige Begriffe der Erfindung näher erläutert.

Im Sinne der Erfindung sind "3D-Druckverfahren" alle aus dem Stand der Technik bekannten Verfahren, die den Aufbau von Bauteilen in dreidimensionalen Formen ermöglichen und mit den beschriebenen Verfahrenskomponenten und Vorrichtungen kompatibel sind. Insbesondere sind dies Pulver-basierte Verfahren wobei die im Folgenden beschriebenen Verfahren bevorzugt sind.

"Selektiver Binderauftrag" oder "Selektiver Bindersystemauftrag" oder "Binderflüssigkeitsauftrag" oder "Aufbringen der Binderflüssigkeit" kann im Sinne der Erfindung nach jedem Partikelmaterialauftrag erfolgen oder je nach den Erfordernissen des Formkörpers und zur Optimierung der Formkörperherstellung auch unregelmäßig erfolgen, d.h. nicht linear und parallel nach jedem Partikelmaterialauftrag. "Selektiver Binderauftrag" oder "Selektiver Bindersystemauftrag" kann somit individuell und im Verlauf der Formkörperherstellung eingestellt werden.

Unter "Bindersystem" ist ein Materialsystem zu verstehen, das in der Lage ist, das Partikelmaterial zu binden. Das Bindersystem besteht mindestens aus einer zu verdruckenden "Binderflüssigkeit" und evtl. weiteren flüssigen oder feststoffförmigen Komponenten, die sich in der Binderflüssigkeit als auch im Partikelmaterial befinden können. Das Bindersystem kann chemisch oder physikalisch oder durch eine Kombination aus chemisch und physikalischem Prozess abbinden. Die Abbindung kann durch Zugabe von Energie z.B. in Form von Wärme oder Licht angestoßen oder beschleunigt werden. Allgemein kommen als Bindersystem alle dem Fachmann in dem Zusammenhang bekannten Materialsysteme in Betracht. Beispielhaft kann ein Bindersystem eine "Binderflüssigkeit" und einen feststoffförmigen "Binder" umfassen, der im Partikelmaterial (Baumaterial) enthalten ist und der in der Binderflüssigkeit löslich ist. Der Feststoff wird in diesem Fall durch das aus dem Tintenstrahldruckkopf ausgestoßene und auf das Partikelmaterial aufgetragene Lösemittel in Lösung gebracht. Nach dem im wesentlichen Verdampfen oder Trocknen der Binderflüssigkeit sind die selektiv bedruckten Bereiche des Baumaterials miteinander verbunden. Gleichermaßen kann mit dem Fachmann bekannten chemischen Systemen in der Binderflüssigkeit oder/und dem Partikelmaterial eine selektive Verfestigung erzeugt werden.

"Formkörper", "Modell", "3D-Formteil" oder "Bauteil" im Sinne der Erfindung sind alles mittels des erfindungsgemäßen Verfahrens oder/und der erfindungsgemäßen Vorrichtung hergestellte dreidimensionale Objekte, die eine Formfestigkeit aufweisen.

Als "Vorrichtung" zum Durchführen des erfindungsgemäßen Verfahrens kann jede bekannte 3D-Druckvorrichtung verwendet werden, die die erforderlichen Bauteile beinhaltet. Übliche Komponenten beinhalten Beschichter, Baufeld, Mittel zum Verfahren des Baufeldes oder anderer Bauteile, Dosiervorrichtung, Druckkopf, Wärmemittel, Verfahrmittel für Batchverfahren oder kontinuierliche Verfahren und andere dem Fachmann bekannte Bauteile, die deshalb hier nicht näher ausgeführt werden.

Als "Partikelmaterialien" oder auch als "Baumaterialien" können alle für den Pulver-basierten 3D Druck bekannten Materialien verwendet werden, insbesondere Sande, Keramikpulver, Metallpulver, Kunststoffe, Holzpartikel, Faserwerkstoffe, Cellulosen oder/und Lactosepulver. Das Partikelmaterial ist vorzugsweise ein trocken frei fließendes Pulver, aber auch ein kohäsives schnittfestes Pulver kann verwendet werden.

"Bauraum" im Sinne der Erfindung ist der geometrische Ort in dem die Partikelmaterialschüttung während des Bauprozesses durch wiederholtes Beschichten mit Partikelmaterial wächst. Im Allgemeinen wird der Bauraum durch einen Boden, die Bauplattform, durch Wände und eine offene Deckfläche, die Bauebene, begrenzt. Die Bauebene kann horizontal sein, aber beispielsweise in kontinuierlichen Verfahren auch einen Winkel bilden, sodass der Schichtauftrag schräg in einem Winkel erfolgt.

Ein "Baubehälter" im Sinne der Erfindung realisiert einen Bauraum. Er weist demnach einen Boden, Wände und eine offene Zugangsfläche, die Bauebene, auf. Der Baubehälter weist immer Teile auf, die sich relativ zum Gestell der 3D-Druckvorrichtung nicht bewegen. Austauschbare Baubehälter, sogenannte Wechselbehälter, ermöglichen es die Maschine quasi ständig zu betreiben, da die Wechselbehälter in die Maschine ein- und ausgefahren werden können. Die Teile eines ersten Bauvorganges können so außerhalb der 3D-Druckvorrichtung ausgepackt werden, während innerhalb der Maschine in einem zweiten Baubehälter bereits neue Teile gedruckt werden können.

Die "Druck- und Beschichterebene" ist erfindungsgemäß die Abstraktion des Ortes des momentan ablaufenden Bauprozesses. Da konstruktiv die Dosiereinheit und der Beschichter auf einer Verfahreinheit mit gemeinsamen Komponenten auf nahezu einer Höhe in der Vorrichtung bewegt werden, wird in dieser Beschreibung die "Druck- und Beschichterebene" als in der Oberkante einer neu aufgebrachten Schicht liegend betrachtet. Diese kann eine horizontale Ebene bilden oder in einem Winkel angeordnet sein.

Eine "Bauplattform" bewegt sich erfindungsgemäß relativ zur Druck- und Beschichterebene. Diese Relativbewegung findet während des Bauprozesses in unterbrochenen Bewegungen in Schichtstärke statt. Sie definiert die Schichtstärke.

"Behälterwand" oder "Wand" bezeichnet eine Barriere für das Partikelmaterial. Das Partikelmaterial kann nicht von einer Seite auf die andere Seite der Wand gelangen.

Eine "Dichtung" bezeichnet in dieser Schrift jeweils konstruktive Elemente die einen Durchtritt des Partikelmaterials durch Kontaktstellen zwischen relativ zueinander bewegten Wänden oder Wänden und der Bauplattform verhindert.

Mit "Dampfkanal" wird die abstrakte Vorstellung einer Strömungsröhre im Baumaterial bezeichnet. Dieser Begriff wird im Zusammenhang mit Längen verwendet. In der Realität stellt der Luftraum in einer Pulverschüttung des Baumaterials einen geometrisch komplexen verbundenen Raum dar.

Die "geometrische Bauteilgrenze" bezeichnet eine Abstraktion eines Bauteiles im Baumaterial. Aufgrund des diskreten Charakters der Partikel des Baumaterials weicht das im Bauprozess entstehende Teil von der geometrischen Bauteilgrenze ab.

"Zwangsbelüftung" bezeichnet eine zentrale Ausprägung der Erfindung, die durch eine gesteuerte Luftströmung erzielt wird. Die freie Konvektion im Baumaterial ist gewissermaßen das Gegenteil zur Zwangsbelüftung. Hier können Dämpfe nur durch Diffusion auf Grund von Konzentrationsgradienten abgeführt werden. Bei der Zwangsbelüftung werden die Dämpfe, d.h. Lösemitteldämpfe oder Bindermittelflüssigkeitsdämpfe, mit einem Luftstrom gesteuert und gezielt bewegt bzw. aus dem Baumaterial entfernt.

Das "Rückhaltesystem" ist jeweils in der Verbindungsstelle zwischen Lüftungssystem und Partikelmaterialschüttung zu finden. Seine Aufgabe ist es im Luftstrom vorhandene Partikel abzufangen. Es kann als Siebgewebe oder als poröser Körper ausgeführt sein. 3D-gedruckte Körper können ebenso als Rückhaltesystem dienen. Hierbei ist es unerheblich, ob diese schon vollständig ausgetrocknet sind. Solche Körper können auch mit dem Bauprozess erzeugt werden.

Eine "gesteuerte Luftströmung" im Sinne der Erfindung ist ein Luftstrom, der definiert durch das Baumaterial geleitet wird oder jedenfalls gezielt von außerhalb in das aufgetragenen Baumaterial eingeleitet wird und zum schnelleren Abtransport der Lösemitteldämpfe (Binderflüssigkeitsdämpfe) das aufgetragenen Baumaterial durchströmt. Dadurch wird die Binderflüssigkeit im aufgetragenen Baumaterial reduziert oder im Wesentlichen getrocknet. Die "gesteuerte Luftströmung" kann einfache Umgebungsluft sein, die vorzugsweise temperiert wird, vorzugsweise erwärmt, oder auch eine definierte Gasmischung.

"Reduziert oder im wesentlichen getrocknet" in Bezug auf die Binderflüssigkeit bedeutet, dass die Menge an Binderflüssigkeit im Vergleich zum unmittelbaren Binderflüssigkeitsauftrag während des selektiven Auftragens vermindert ist. Vorzugsweise ist die Binderflüssigkeit soweit reduziert, dass das hergestellte Bauteil eine Festigkeit aufweist, die es soweit stabil macht, dass ein Entpacken leicht und ohne Probleme erfolgen kann. "Im wesentlichen getrocknet" bedeutet, dass das Bauteil keine oder nur noch Reste an Binderflüssigkeit enthält. Der Vorgang des "Reduzierens" oder "Trocknens" der Binderflüssigkeit wird mittels einer "gesteuerten Luftströmung" nach der Erfindung vorteilhafter Weise beschleunigt und gezielt gesteuert hinsichtlich Zeit und Menge der Reduzierung der Binderflüssigkeit.

"Schichtweise verfahren" im Sinne der Erfindung bezeichnet in einem Wechselbehälter oder in einer anderen horizontalen Bauebene den Vorgang, dass das Baufeld um eine Schichtstärke abgesenkt wird oder das oder die über dem Baufeld befindlichen Vorrichtungsteile um eine Schichtstärke hochgefahren werden. In einem kontinuierlichen Verfahren bezeichnet "schichtweise verfahren" das Verfahren des aufgetragenen Baumaterials (des Baumaterialblocks in der Druckmaschine) um eine Schichtstärke, sodass eine neue Schicht an Partikelmaterial aufgetragen werden kann und so kontinuierlich ein Schichtauftrag und selektiver Binderflüssigkeitsauftrag erfolgen kann.

"Zeitlich gesteuert durchströmen" im Sinne der Erfindung bedeutet, dass die gesteuerte Luftströmung während des Verfahrens zu einem definierten Zeitpunkt und über einen definierten Zeitraum durchgeführt wird und die gesteuerte Luftströmung regelmäßig oder unregelmäßig während des Verfahrens erfolgen kann.

Im Folgenden werden die Erfindung und ihre bevorzugten Ausführungsformen näher beschrieben.

Insbesondere bezieht sich die Erfindung auf ein Verfahren gemäß Anspruch 1, zum Herstellen dreidimensionaler Modelle, vorzugsweise poröser Modelle, mittels Schichtaufbautechnik, wobei partikelförmiges Baumaterial in einer Schicht auf ein Baufeld aufgetragen wird und anschließend eine Binderflüssigkeit selektiv auf das Baumaterial aufgetragen wird, schichtweise verfahren wird und diese Schritte wiederholt werden, bis das gewünschte Modell erzeugt ist, wobei eine gesteuerte Luftströmung durch das aufgetragene Baumaterial geführt wird. Das aufgebauten und/oder das erhaltenen Modell ist dabei vorzugsweise porös.

Mit dem erfindungsgemäßen Verfahren wird es vorteilhafter Weise möglich die Prozessdauer deutlich zu verringern und so die Wirtschaftlichkeit des Druckverfahrens signifikant zu erhöhen.

Dies wird dadurch erreicht, dass mittels einer gesteuerten Luftströmung die Binderflüssigkeit schnell abtransportiert werden kann und so im Bauteil das Lösemittel schnell reduziert wird und es vorzugsweise im Wesentlichen trocken ist. Vorteilhafter Weise wird so nicht nur die Trocknungszeit des Bauteils reduziert, sondern es wird möglich große Bauteile, die mit herkömmlichen Verfahren praktisch nicht trockenbar waren und somit nur schwierig oder überhaupt nicht mit 3D Verfahren herstellbar waren, nun herzustellen.

Dabei war es überraschend, dass ein Luftstrom durch das aufgetragene Baumaterial geführt werden kann ohne zu Verwirbelungen oder Instabilität in dem Pulvermaterial zu führen und die Abbildegenauigkeit des Druckprozesses nachteilig zu beeinflussen. Es hat sich überraschender Weise gezeigt, dass mit dem erfindungsgemäßen Verfahren nicht nur die Verfahrensdauer deutlich vermindert werden kann, sondern auch die Bauteile in guter Qualität nicht negativ beeinflusst werden und qualitativ hochwertige 3D-Bauteile hergestellt werden können.

In dem Verfahren können alle für das Verfahren geeigneten Binderflüssigkeiten verwendet werden und der Siedepunkt der Binderflüssigkeit wird so gewählt, dass er vorteilhaft in Zusammenspiel mit den anderen Materialkomponenten ist. Vorzugsweise liegt der Siedepunkt der Binderflüssigkeit unter oder über dem von destilliertem Wasser.

Die gesteuerte Luftströmung wird dabei so angelegt und durch das aufgetragene Baumaterial geleitet, dass die Binderflüssigkeit in vorteilhafter Weise aus dem Bauteil abtransportiert wird. Die Luftströmung wird dabei in ihrer Stärke an die anderen Verfahrensbedingungen und das verwendete Material geeignet angepasst. Die gesteuerte Luftströmung durchströmt nach dem Auftragen der Schichten das auf das Baufeld aufgebrachte Baumaterial. Bevorzugt ist, dass die gesteuerte Luftströmung das auf das Baufeld aufgebrachte Baumaterial diskontinuierlich oder kontinuierlich durchströmt, vorzugsweise das auf das Baufeld aufgebrachte Baumaterial zeitlich gesteuert durchströmt.

Je nach den Erfordernissen und weiteren Verfahrensbedingungen und den verwendeten Materialien wird die gesteuerte Luftströmung das auf das Baufeld aufgebrachte Baumaterial im Wesentlichen in seinem gesamten Volumen durchströmen, vorzugsweise das Baumaterial an ausgewählten Bereichen durchströmen und mehr bevorzugt das Baumaterial im Bereich der oberen Baumaterialschichten durchströmen.

Die gesteuerte Luftströmung wird vorzugsweise vor dem Eintritt in das Baumaterial erwärmt.

Die gesteuerte Luftströmung wird vorzugsweise durch Überdruck oder durch Unterdruck erzeugt.

Vorzugsweise werden Lufteinlässe in das Baumaterial eingebracht.

Die gesteuerte Luftströmung wird in geeigneter Weise durch das aufgebrachte Baumaterial geführt, um vorzugsweise einen vorteilhaften Abtransport der Binderflüssigkeitsdämpfe zu bewirken und im Bauteil das Lösemittel zu reduzieren oder es im Wesentlichen zu trocknen. Vorzugsweise wird die gesteuerte Luftströmung das Baumaterial in Richtung der Schwerkraft, gegen die Richtung der Schwerkraft oder/und in einem bestimmten Winkel zur Richtung der Schwerkraft durchströmen.

Es sind alle möglichen Kombinationen der Richtung und Steuerung der gesteuerten Luftströmung möglich, wobei die Richtung der gesteuerten Luftströmung während des Verfahrens geändert wird.

Die Vorrichtung zum Durchführen des erfindungsgemäßen Verfahrens umfasst alle nötigen grundsätzlichen Vorrichtungsmittel wie z.B. Bauplattform, Beschichter, Druckeinrichtung, Verfahreinrichtung etc. Vorzugsweise weist die erfindungsgemäße Vorrichtung zum Herstellen dreidimensionaler Modelle mittels Schichtaufbautechnik ein oder mehrere Mittel zur Erzeugung einer gesteuerten Luftströmung im Baumaterial auf. Dabei wird der Luftstrom in der Vorrichtung vorzugsweise mit einem oder mehreren Mitteln durch einen Über- oder Unterdruck erzeugt.

Weiterhin ist die Vorrichtung so konstruiert, dass durch die gesteuerte Luftströmung nicht Baumaterial aus dem Bauraum mitgenommen wird. Vorzugsweise weist die Vorrichtung ein Rückhaltesystem mit vorzugsweise kleineren oder größeren effektiven Poren als dem mittleren Korndurchmesser des partikelförmigen Baumaterials auf. Es kann jedes für diesen Zweck geeignete Mittel eingesetzt werden, vorzugsweise ist das Material des Rückhaltesystems ein Siebgewebe, eine Filterstruktur, ein offenporiges Sintermaterial oder/und ein poröses Material.

Die gesteuerte Luftströmung wird in geeigneter konstruktiver Weise in den Baubehälter oder den Bauraum eingebracht und so geführt, dass diese Luftströmung auch wieder entweichen kann und dabei Binderflüssigkeitsdämpfe abtransportiert. Vorzugsweise sind in oder an der Vorrichtung Mittel für die gesteuerte Luftströmung über, unter oder seitlich des Baubehälters angebracht. Vorzugsweise hat die Vorrichtung mindestens zwei zumindest teilweise luftdurchlässige Wände im Baubehälter oder/und einen zumindest teilweise luftdurchlässigen Boden und vorzugsweise mindestens ein Luftströmungskanalsystem bzw. seitlich des Bauraumes angebracht.

Der zumindest teilweise luftdurchlässige Boden oder/und mindestens eine der zumindest teilweise luftdurchlässigen Wände kann mit dem Mittel zum Erzeugen der gesteuerten Luftströmung über ein Luftströmungsmittel, vorzugsweise ein Rohr, in Kontakt stehen.

Das Baumaterial kann über eine auf das Baumaterial aufgelegte, mit einem Luftströmungsmittel versehene Platte, in Kontakt stehen.

Die gesteuerte Luftströmung wird mit dem Fachmann bekannten Einrichtungen erzeugt. Die Vorrichtung weist ein oder mehrere Mittel zur Erzeugung einer gesteuerten Luftströmung auf.

Weiterhin sind die Strömungsrichtungen und vorzugsweise die Strömungsstärke der Mittel zur Erzeugung einer gesteuerten Luftströmung regelbar.

Damit besteht eine Lösung der Erfindungsaufgabe darin, die Trocknung bzw. das Abdampfen physikalisch durch das Abführen von Lösemitteldampf (Binderflüssigkeitsdampf) aus dem Pulverkuchen des Baumaterials zu beschleunigen. Dies ermöglicht dann die Anpassung der flüssigen Binderflüssigkeit an die Druckaufgabe.

Damit kann vorteilhafter Weise sowohl die Leistung des Druckverfahrens erhöht werden, als auch die Qualität der Bauteile gesteigert werden.

Weitere bevorzugte Ausführungsformen der Erfindung sind im Weiteren dargestellt.

In den Grundzügen wird ein System zum schichtweisen Aufbau von Modellen mit Tintenstrahldrucktechnik verwendet. Dabei gliedert sich der Ablauf nach dem Stand der Technik wie folgt: Es wird eine Pulverschicht auf eine Bauplattform aufgetragen und nivelliert. Im Anschluss wird die Schicht gemäß der Schichtdaten des 3D-Modells mit einem Fluid, d.h. einer Binderflüssigkeit, bedruckt. Die bedruckten Stellen ändern dabei eine oder mehrere Eigenschaften (Festigkeit, Wasserlöslichkeit etc.). Oft verfestigt das Material durch eine Verbindungskomponente im flüssigen Binder (z.B. einem Kleber). Auch sind Binder als Pulverbestandteile üblich. Nach dem Druckprozess wird die Bauplattform abgesenkt und der Prozess beginnt von vorne.

Diese Schritte werden solange wiederholt bis das Bauteil komplett im mitgebauten Pulverkuchen des Baumaterials vorliegt.

Wie oben beschrieben wird, eine Flüssigkeit selektiv auf das Baufeld aufgetragen. Die hierzu verwendeten Piezodruckköpfe stellen besondere Anforderungen an die Druckflüssigkeit. Zum einen ist die Viskosität der Flüssigkeit eine wichtige Größe. Zu hohe Viskositäten verursachen durch hohe Reibung in der Düse einen hohen Energieverbrauch bei der Einzeltropfenerzeugung. Ab einer Grenzviskosität von ca. 20mPas kann kein Tropfen mehr gebildet werden. Eine zu niedrige Viskosität führt zu einer unzureichenden Dämpfung des Systems. Die Tropfenbildung ist ebenfalls gestört und ein sicheres Drucken ist nicht möglich.

Eine weitere wichtige Kenngröße ist der Dampfdruck der Flüssigkeit. Ist der Dampfdruck zu hoch, können beim Tropfenbildungsprozess, bei dem eine Phase von Unterdruckwirkung auf die Druckflüssigkeit auftritt, Dampfblasen erzeugt werden, die die Tropfenbildung verhindern.

Als dritte Kenngröße gilt die Oberflächenspannung. Sie stellt eine Größe dar die direkt auf die notwendige Tropfenbildungsenergie wirkt. Ist sie zu hoch kann kein Tropfen gebildet werden.

Im Allgemeinen wird die Druckflüssigkeit für zwei Größen optimiert: Für die Tropfenbildung und für das zu erzeugende Bauteil. Üblicherweise ergeben sich dabei, wie oben bereits beschrieben, Zielkonflikte.

Für den Bauprozess des zu erzeugenden Bauteils sind mehrere Größen charakterisierend: Die Geschwindigkeit der Bindewirkung entscheidet über die Verarbeitbarkeit. Ist die Flüssigkeit zu schnell, werden bereits gedruckte Schichten durch Biegemomente aufgerollt. Da dabei Teile des Bauteils oberhalb der aktuellen Beschichterebene liegen, werden die Bauteile verschoben oder mitgerissen.

Die Viskosität der Flüssigkeit selber ist für den Bauprozess nur dann von Bedeutung, wenn im flüssigen Binder ein wesentlicher Anteil des Bindemittels enthalten ist und die Flüssigkeit nicht durch Lösen eines Pulverbestandteiles ihre Viskosität steigert. Bei solchen Systemen kann eine Diffusion des Binders in Bereiche, die keine Verfestigung erfahren sollen, nur durch erhöhte Viskosität verlangsamt werden. Das stoppen dieses Diffundierens ist nur durch Abtrocknen möglich.

Bei den meisten Prozessen ist aber der Dampfdruck von entscheidender Bedeutung. Während des Druckprozesses kann nur ein Teil des Lösemittels entweichen. Dies ist zum Teil gewünscht, damit die Wirkung des Lösemittels verzögert werden kann, um oben genannte Prozessstörungen zu verhindern. In der Folge muss ein erheblicher Teil des Lösemittels nach dem Prozess vom Bauteil abtrocknen.

Durch den Dampfdruck des Lösemittels entsteht durch diesen Verdampfungsvorgang während der schichtweisen Bauteilerstellung schnell eine gesättigte Atmosphäre. Diese Atmosphäre muss über die langen und schmalen Kanäle im Pulver entweichen.

Ein Teil der Lösemittelmasse schlägt sich auch am das Bauteil umgebenden Pulver nieder. In der Folge sind am Bauteil Anhaltungen von schwach gebundenem Pulver die nach dem Bauprozess entfernt werden müssen.

Die der Anmeldung zugrunde liegende erfindungsgemäße Lösung ist die Idee diese gesättigte Atmosphäre durch einen gesteuerten Luftstrom durch das Pulver des Baumaterials schneller zu bewegen, als dies durch die natürliche Konvektion möglich ist.

Als erster Nutzeffekt kann die Beschleunigung bestehender System betrachtet werden. Dabei wird der Zeitpunkt, an dem sicher die produzierten Bauteile entpackt werden kann, wesentlich früher erreicht. Dies stellt einen wirtschaftlichen Vorteil dar, da die Lieferzeiten additiv erzeugter Bauteile entscheidend für die Marktakzeptanz und den Preis sind.

Der Einsatz eines erfindungsgemäßen Verfahrens ermöglicht zudem Variationen der Prozesschemie. So können beispielsweise Systeme mit niedrigen Abdampfraten eingesetzt werden. Die Beschleunigung durch das erfindungsgemäße Verfahren ermöglicht dann wieder akzeptable Prozesszeiten. Die Vorteile liegen außerdem in einer Schonung des Druckkopfes, in qualitativ höherwertigen Bauteilen und in einer breiteren Werkstoffvielfalt.

Das Anlegen eines Unterdrucks zum Erzeugen der gesteuerten Luftströmung ist bevorzugt. Das Pulver bleibt vorteilhafter Weise in seiner Anordnung stabil. Es kann ein geringer aber stabiler Luftstrom durch das Pulver realisiert werden.

Grundsätzlich kann aber auch ein Überdruck im Pulver angelegt werden. Hier lässt sich allerdings schwieriger eine sichere Prozessführung erreichen. Bedingt durch die Natur des Partikelmaterials entstehen durch das Anlegen von Überdruck Kanäle im Pulver die die gesamte Luftströmung tragen. Das Pulver wird auf Grund der großen Strömungsgeschwindigkeiten in den Kanälen mitgerissen. Auch feinfühligste Einstellungen am Überdruck bringen kein stabiles Prozessfenster.

Die gesteuerte Luftströmung, vorzugsweise der Unterdruck, wird über ein Filterelement in das Pulver eingebracht. An diesem staut sich das Pulver auf. Besteht beispielsweise die Bodenplatte des Baubehälters aus einer Filterstruktur, wird das Pulver beim Anlegen eines moderaten Unterdrucks nicht deformiert.

Überraschender Weise wurde bei weiteren Experimenten festgestellt, dass die Anhaftungen am Bauteil durch die Vorrichtung richtungsabhängig auftreten. Bei konventionellen Vorrichtungen dagegen sind diese eher sphärisch um das Bauteil zu finden.

Deshalb hat es sich als vorteilhaft erwiesen, den Luftstrom in seiner Richtung zu kontrollieren. So kann beispielsweise die Richtung der Strömung gegen die Richtung der Schwerkraft gelegt werden.

Weiterhin wird die Strömungsrichtung während des Trocknungsprozesses umgeschaltet. Dadurch sind die Einwirkzeiten des Lösemittels gering und die Anhaftungen in der Folge gering.

### Kurze Beschreibung der Figuren:

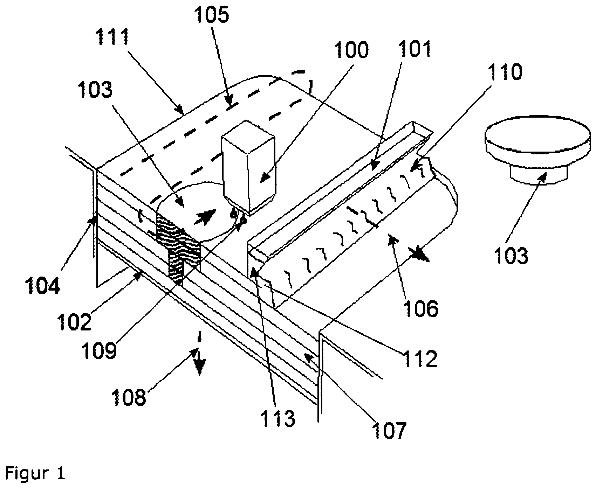

Figur 1: Schematische Darstellung der Komponenten eines pulverbasierten 3D-Druckers als geschnittener Schrägriss.
Figur 2: Schema des Ablaufes eines konventionellen 3D-Druckprozesses.

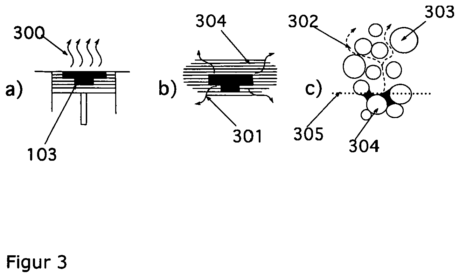

Figur 3: Illustration des Trocknungsvorganges

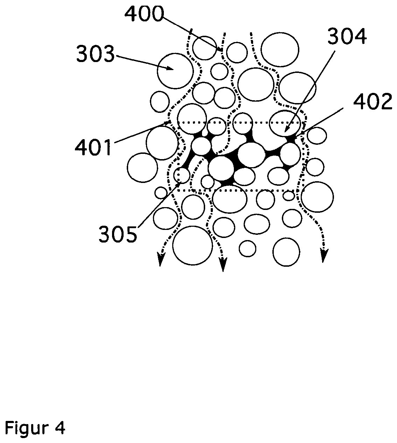

Figur 4: Trocknung mit Zwangskonvektion

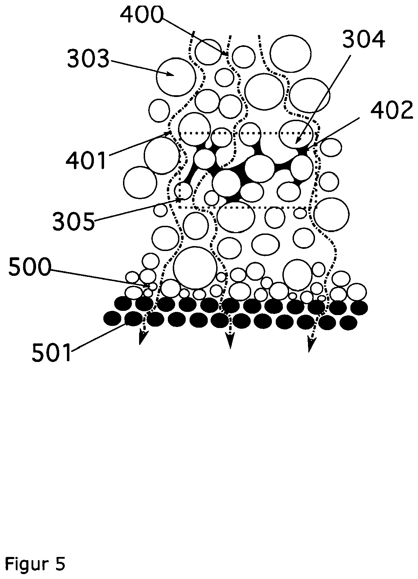

Figur 5: Kontaktierungselemente

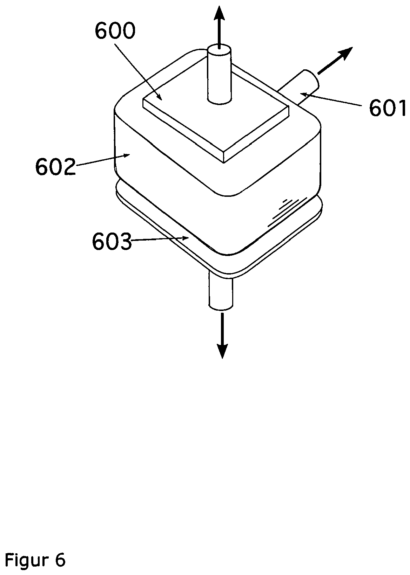

Figur 6: Einbauorte für Luftführungselemente.

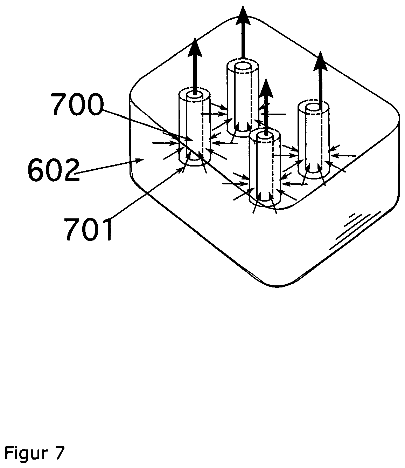

Figur 7: In den Pulverkuchen eingebrachte Luftführungselemente

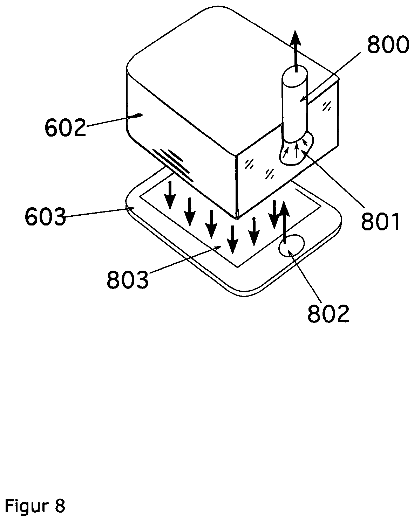

Figur 8: Kontaktierung von Luftführungselementen durch das Pulver

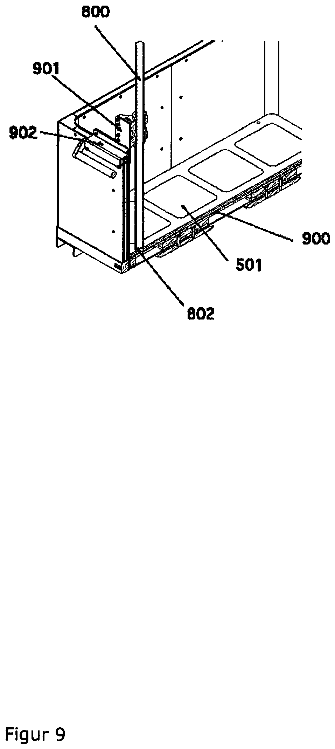

Figur 9: Schrägriss eines Baubehälters

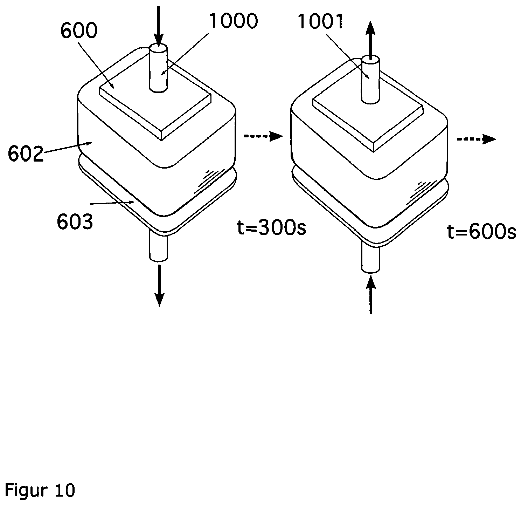

Figur 10: Schalten der Strömungsrichtung

### Ausführungsbeispiel

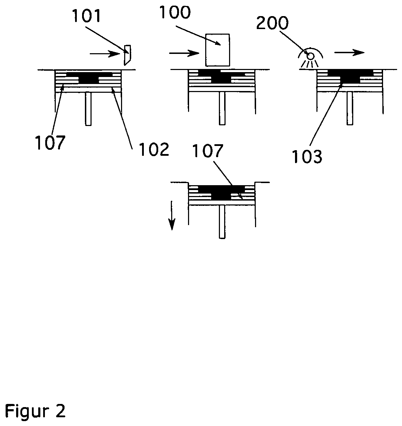

Eine geeignete Vorrichtung weist einen Pulverbeschichter (101) auf. Mit diesem wird Partikelmaterial auf eine Bauplattform (102) aufgebracht und geglättet (Figur 2(a)). Das aufgebrachte Partikelmaterial kann aus verschiedensten Materialien bestehen. Beispielsweise können Sande, Keramikpulver, Metallpulver, Kunststoff, Holzpartikel, Faserwerkstoff, Cellulosen, Lactosepulver usw. verwendet werden. Die Fließeigenschaften dieser Materialien können stark unterschiedlich ausfallen. Verschiedene Beschichtertechniken lassen die Schichtbildung von trockenen frei fließenden Pulvern, über kohäsive schnittfeste Pulver, bis hin zu flüssigkeitsbasierten Dispersionen zu. Die Höhe der Pulverschichten (107) wird durch die Bauplattform (102) bestimmt. Sie wird nach dem Aufbringen einer Schicht abgesenkt. Beim nächsten Beschichtungsvorgang wird das entstandene Volumen verfüllt und der Überstand glattgestrichen. Das Ergebnis ist eine nahezu perfekt parallele und glatte Schicht definierter Höhe.

Nach einem Beschichtungsprozess wird die Schicht mittels eines Tintenstrahldruckkopfes (100) mit einer Flüssigkeit bedruckt (Figur 2(b)). Das Druckbild entspricht dem Schnitt durch das Bauteil in der aktuellen Bauhöhe der Vorrichtung. Die Flüssigkeit trifft auf das Partikelmaterial und diffundiert langsam hinein.

Nach dem Drucken des Binders kann die Schicht optional erwärmt werden (Figur 2(c)). Dazu kann beispielsweise ein IR-Strahler (200) über das Baufeld geführt werden. Dieser kann mit der Achse des Beschichtungssystems gekoppelt sein. Während des Heizens verdampft ein Teil des flüssigen Bindemittels. Bei feuergefährlichen Flüssigkeiten wird das verdampfende Material sofort abgesaugt.

Im Anschluss an diesen optionalen Heizprozess wird die Bauplattform (102) um eine Schichtstärke abgesenkt. Die Schritte Schichtbilden, Bedrucken, Erwärmen und Absenken werden nun solange wiederholt bis das gewünschte Bauteil (103) vollständig erstellt ist.

Das Bauteil (103) liegt jetzt vollständig im Pulverkuchen (602) vor. Je nach dem welcher physikalische oder chemische Prozess der Verbindung der Partikel (303) zu Grunde liegt, ist das Bauteil nun mehr oder weniger verfestigt. Meist liegt das Bauteil direkt nach dem Drucken in weichem Zustand vor.

Dieser Zustand ist solange das Bauteil (103) im Pulver (602) liegt, kein Problem. Sobald das Bauteil allerdings aus dem Pulver entpackt wird, ist eine geometrische Deformation durch die Schwerkraft und andere Kraftwirkungen unvermeidbar.

Deshalb wird das Bauteil üblicherweise im Pulver belassen. Das überschüssige Bindemittel (301), das das Bauteil (103) nicht fest werden lässt, verdampft jetzt über verschiedene Dampfkanäle (302) im ungebundenen Partikelmaterial (303). Die Bindungen des gebundenen Partikelmaterials (304) in der geometrischen Bauteilgrenze (305) verfestigen dabei immer mehr. Nach einer bestimmten Wartezeit ist der Körper (103) ausreichend fest, um ihn entpacken zu können.

Die Länge des Dampfkanals (302) bestimmt gemeinsam mit dem Dampfdruck des Materials (301) die Trocknungsgeschwindigkeit. Tief im Partikelmaterial (303) liegende Teile trocknen dabei oft erst in wirtschaftlich nicht tragbaren Zeitspannen.

Werden poröse Bauteile erzeugt, können erfindungsgemäß die Trockenzeiten durch eine Zwangskonvektion reduziert werden. Hierzu wird an das Partikelmaterial eine Druckdifferenz angelegt. Dabei bilden sich Luftströmungen die wieder als Kanäle bezeichnet werden können. Diese verlaufen durch das geometrische Bauteil (400) und außerhalb des geometrischen Bauteils (401). Der flüssige Binder (402) dampft in den ihn umgebenden Raum. Die Strömungen (400,401) nehmen den Binder dabei auf und leiten ihn erfindungsgemäß aus der Schüttung (602) heraus.

Dieser Trocknungseffekt kann noch verstärkt werden, wenn gewärmte Luft durch die Schüttung (602) geleitet wird.

Versuche mit Überdruck zum Treiben der Strömung zeigen, dass dieses Vorgehen für eine Zwangsbelüftung der Schüttung wenig geeignet ist. Selbst bei feinfühliger Einstellung des Druckes bilden sich Kanäle (ähnlich 302) die auf Grund des Überdruckes am freien Ende zu einem Wegfliegen des Partikelmaterial führen. Dadurch sinkt der Strömungswiderstand und der Effekt verstärkt sich selbst. Für das erfindungsgemäße Verfahren wird Unterdruck bevorzugt.

Da im Luftstrom (400,401) auch bei Anwendung von Unterdruck Partikel der Schüttung (602) mitgerissen werden können, muss ein Rückhaltesystem (501) die Strömung außerhalb und innerhalb der Schüttung (602) trennen. Das Rückhaltesystem kann erfindungsgemäß beispielsweise als Sieb ausgeführt werden. Die Maschenweite muss den Partikeldurchmessern im Pulver (303) angepasst werden.

Dieses Rückhaltesystem kann ebenso für die Verwendung von Überdruck angewandt werden. Dabei muss das Rückhaltesystem (501) so ausgestaltet sein, dass die oben beschriebene Kanalbildung sicher verhindert wird.

Kleinere Partikel können normalerweise durch das Rückhaltesystem (501) entweichen. Allerdings bildet das Partikelmaterial (500) vor dem Rückhaltesystem (501) ein Filtersystem das kleinere Partikel abfängt. Ebenso eignen sich allgemein poröse Materialien als Rückhaltesystem (501). Dies können z.B. textile Gewebe sein. Ebenso geeignet sind verfilzte Fasern. Sinterkörper oder ähnliche Strukturen die aus Partikeln bestehen zeigen im Test ebenso gute Eigenschaften.

Auch mit dem 3D-Druckverfahren oder anderen partikelbasierten Additiv-Manufacturingverfahren hergestellte Formkörper können eingesetzt werden. Dabei eignet sich überraschenderweise das Partikelmaterial selber als Baumaterial das nachher zurückgehalten werden soll.

Die Zwangsbelüftung, d.h. gesteuerte Luftströmung, kann von verschiedenen Orten aus erfolgen. Das ist zum einen von außen möglich. Zum anderen kann aber auch eine innere Belüftung stattfinden.

Ein erfindungsgemäßer Weg ist es, die Belüftung über den Boden des Baubehälters - also die Bauplattform (103) durchzuführen. Hierzu wird ein Rückhaltesystem (501) in den Boden eingelegt. An der unteren Seite der Bauplattform (103) wird ein Stutzen angebracht. Da die Bauplattform im Allgemeinen beweglich ist, wird der Stutzen mit einem Schlauch mit einer Unterdruckquelle verbunden.

Die Unterdruckquelle kann beispielweise ein Staubsauger sein. Dabei muss ein justierbares Falschluftsystem am Schlauch angebracht sein. Damit kann die Druckdifferenz über der Schüttung (602) genau eingeregelt werden. Entscheidende Größen dabei sind das Partikelmaterial und die Höhe der Schüttung.

Ebenso ist es möglich ein anderes Absaugsystem zu wählen. Jedes elektrisches Gebläse oder pneumatischen Saugsystem kann dabei zum Einsatz kommen. Es sind nur moderate Drücke erforderlich.

Des Weiteren kann die Schüttung (602) über die Wände (601) des Baubehälters zwangsbelüftet werden. Hierbei muss das Rückhaltesystem sehr glatt ausgeführt sein, das die Bauplattform (103) im Allgemeinen an dieser Fläche mit ihrer Dichtung entlang gleitet. Hierfür können beispielsweise geschliffene Sintermetallplatten verwendet werden.

Um über die Deckfläche der Schüttung zu belüften, muss nach dem Bauprozess eine "Kontaktiervorrichtung" auf die Schüttung (602) gelegt werden. Diese enthält wieder ein Rückhaltesystem (501) und einen Anschlussstutzen. Für das Einströmen der Luft muss die Bauplattform (102) luftdurchlässig ausgeführt sein.

Die Belüftung kann darüber hinaus durch im Bauprozess erstellte Belüftungskörper(700) erfolgen. Besonders bevorzugt sind hier zylindrische Körper mit Bohrungen. Diese werden nach dem Bauprozess im Baubehälter belassen. Die Bohrung wird mit einem Sauger freigesaugt. Im Anschluss wird über einen vorher definierten Stutzen ein Rohr angesetzt das mit dem Saugsystem beispielsweise mit einem flexiblen Schlauch verbunden ist. Im Inneren der Schüttung (602) entsteht dabei eine radiale Strömung (701). Erfindungsgemäß bevorzugt könnten ebenso die Zuluftkanäle während des Bauprozesses erstellt werden. Diese Verfahrensvariante eignet sich besonders, um gezielt Bereiche zu entlüften und zu trocken.

Dieses Verfahren eignet sich ebenso, um in bestehenden Anlagen verwendet zu werden. Als Erweiterung sind lediglich die Kontaktierung und die Unterdruckeinrichtung notwendig. Eine Änderung der Konstruktion ist nicht erforderlich.

Das zugrundeliegende Vorgehen kann ebenso auf eine weitere Ausführung der Erfindung übertragen werden.

Erfindungsgemäß kann die Zwangsbelüftung der Schüttung (602) über den Baubehälterboden erfolgen. Der Anschluss an das Unterdrucksystem erfolgt bei der oben beschriebenen Variante allerdings durch die Bauplattform. Bei bestehenden Maschinen bedeutet das einen gewissen Umbauaufwand.

Die Bauplattform (102) mit Rückhaltesystem (803) kann allerdings wie oben beschrieben auch durch das Pulver mit dem Unterdrucksystem verbunden werden. Dazu wird mit einem Saugrohr ein Kanal durch die nach dem Bauprozess vorhandene Schüttung gesaugt (einen Zwischenzustand repräsentiert die Pulverhöhle (801)). Eine exakte Führung dieses Rohres ermöglicht ein sicheres Treffen der Kontaktstelle (802) mit dem Saugrohr. Nun kann durch das Saugrohr das Pulver zwangsentlüftet werden.

Innerhalb der Bauplattform wird über eine Luftverteilungsgeometrie (900) ein gleichmäßiger Unterdruck im Pulver sichergestellt. Der technische Aufbau kann in Sandwichbauweise erfolgen. In der der Schüttung zugewandten Schicht sind die Rückhaltesysteme (501) eingelassen.

Eine weitere Ausprägung der Erfindung betrifft die Steuerung. Versuche zeigen, dass durch die Zwangsbelüftung zu verstärkten Anhaftungen an einer Seite der Bauteile (103) führen. Diese liegt in Strömungsrichtung. Diese Eigenschaft ist nicht gewünscht und technisch störend, darum wird die Zwangsbelüftung in ihrer Richtung geschaltet. Dazu wird zum Beispiel unterbrechend jeweils von oben (1000) oder von unten (1001) durch die Schüttung gesaugt. Beispielsweise könnten die Saugzyklen jeweils 5 Minuten andauern.

### Bezugszeichenliste

100 Druckkopf
101 Beschichter
102 Bauplattform
103 Bauteil
104 Baubehälter
105 Druckkopfbahn
106 Beschichterbahn
107 Pulverschichten
108 Richtung der Bauplattformbewegung
109 Dosierte Tropfen
110 Pulverwalze
111 Baufeldberandung
112 Beschichterspalt
113 Beschichtervorrat
200 IR-Strahler
300 Abdampfendes Material bei offener Schicht
301 Ins Pulver abdampfendes Material
302 Möglicher Dampfkanal
303 Ungebundenes Partikel
304 Gebundenes Partikel
305 Geometrische Bauteilgrenze
400 Strömungsrichtung der Zwangsbelüftung durch das geometrische Bauteil
401 Strömungsrichtung der Zwangsbelüftung außerhalb des geometrischen Bauteils
402 Flüssiger Binder
500 Partikelstau
501 Rückhaltesystem (Sieb, poröser Körper)
600 gesteuerte Luftströmung (Zwangsbelüftung) durch die Deckfläche der Schüttung
601 Zwangsbelüftung durch eine Seitenwand
602 Schüttung
603 Zwangsbelüftung durch die Bauplattform
700 Gedruckter und freigesaugter Belüftungskörper
701 Strömung im Pulver
800 Saugrohr
801 Pulverhöhle
802 Kontaktstelle zur Bauplattform
803 Rückhaltesystem an der Bauplattform
900 Luftverteilungsgeometrie
901 Rohrführung
902 Baubehälteranbindung
1000 gesteuerte Luftströmung (Strömung) von oben durch den Pulverkuchen
1001 gesteuerte Luftströmung (Strömung) von unten durch den Pulverkuchen

## Patentansprüche

1. Verfahren zum Herstellen dreidimensionaler Modelle mittels Schichtaufbautechnik, wobei partikelförmiges Baumaterial in einer Schicht auf ein Baufeld aufgetragen wird und anschließend eine Binderflüssigkeit selektiv auf das Baumaterial aufgetragen wird, schichtweise verfahren wird und diese Schritte wiederholt werden, bis das gewünschte Modell erzeugt ist, wobei eine gesteuerte Luftströmung nach dem Auftragen der Schichten durch das aufgetragene Baumaterial geführt wird und die Richtung der gesteuerten Luftströmung während des Verfahrens geändert wird.

2. Verfahren nach Anspruch 1, **dadurch gekennzeichnet, dass** die gesteuerte Luftströmung das auf das Baufeld aufgebrachte Baumaterial diskontinuierlich oder kontinuierlich durchströmt, vorzugsweise das auf das Baufeld aufgebrachte Baumaterial zeitlich gesteuert durchströmt, vorzugsweise **dadurch gekennzeichnet, dass** die gesteuerte Luftströmung das auf das Baufeld aufgebrachte Baumaterial im wesentlichen in seinem gesamten Volumen durchströmt, vorzugsweise das Baumaterial an ausgewählten Bereichen durchströmt und mehr bevorzugt das Baumaterial im Bereich der oberen Baumaterialschichten durchströmt, vorzugsweise **dadurch gekennzeichnet, dass** die gesteuerte Luftströmung vor dem Eintritt in das Baumaterial erwärmt wird, vorzugsweise **dadurch gekennzeichnet, dass** die gesteuerte Luftströmung durch Überdruck oder durch Unterdruck erzeugt wird.

3. Verfahren nach einem der vorhergehenden Ansprüche, **dadurch gekennzeichnet, dass** Lufteinlässe in das Baumaterial eingebracht werden.

4. Verfahren nach einem der vorhergehenden Ansprüche, **dadurch gekennzeichnet, dass** die gesteuerte Luftströmung das Baumaterial in Richtung der Schwerkraft, gegen die Richtung der Schwerkraft oder/und in einem bestimmten Winkel zur Richtung der Schwerkraft durchströmt.

5. Verfahren nach einem der vorhergehenden Ansprüche, **dadurch gekennzeichnet, dass** der Siedepunkt der Binderflüssigkeit unter oder über dem von destilliertem Wasser liegt.

## Claims

1. A method for producing three-dimensional models by means of a layer construction technique, wherein particulate construction material is applied in a layer onto a construction field and then a liquid binding agent is selectively applied onto the construction material, proceeding layer by layer and repeating these steps, until the desired model is obtained, wherein a controlled air flow is passed through the applied construction material after application of the layers and the direction of the controlled air flow is changed during the procedure.

2. The method according to claim 1, **characterised in that**
the controlled air flow flows either discontinuously or continuously through the construction material applied onto the construction field, preferably flowing in a temporally controlled manner through the construction material applied onto the construction field, preferably **characterised in that** the controlled air flow flows substantially through the entire volume of the construction material applied onto the construction field, preferably flowing through the construction material in selected areas and more preferably flowing through the construction material in the upper construction material layers, preferably **characterised in that** the controlled air flow is heated before entering the construction material, preferably **characterised in that** the controlled air flow is generated by overpressure or by underpressure.

3. The method according to any one of the preceding claims, **characterised in that** air inlets are formed in the construction material.

4. The method according to any one of the preceding claims, **characterised in that** the controlled air flow flows through the construction material in the direction of gravity, against the direction of gravity or/and at a specific angle to the direction of gravity.

5. The method according to any one of the preceding claims, **characterised in that** the boiling point of the liquid binding agent is below or above that of distilled water.

## Revendications

1. Procédé de fabrication de modèles tridimensionnels par une méthode de construction couche par couche, dans lequel une couche de matériau de construction en particules est appliquée sur un champ de construction et un liant liquide est ensuite appliquée sur ledit matériau de construction de manière sélective, procédant couche par couche et répétant ces étapes jusqu'à obtenir le modèle désiré, dans lequel procédé un flux d'air régulé est passé à travers le matériau de construction appliqué après application des couches et la direction du flux d'air régulé est modifiée pendant ledit procédé.

2. Procédé selon la revendication 1, **caractérisé en ce que**
le flux d'air régulé traverse, de manière discontinue ou continue, le matériau de construction appliqué sur le champ de construction, la traversée du matériau de construction appliqué sur le champ de construction se faisant de préférence d'une manière commandée en fonction du temps, caractérisé de préférence **en ce que** le flux d'air régulé traverse sensiblement le volume entier du matériau de construction appliqué sur le champ de construction, traverse de préférence des zones sélectionnées du matériau de construction et traverse de préférence encore les couches supérieures du matériau de construction, caractérisé de préférence **en ce que** le flux d'air régulé est chauffé avant d'entrer dans le matériau de construction, caractérisé de préférence **en ce que** le flux d'air régulé est produit par une surpression ou une sous-pression.

3. Procédé selon l'une quelconque des revendications précédentes, **caractérisé en ce que** l'on réalise des entrées d'air dans le matériau de construction.

4. Procédé selon l'une quelconque des revendications précédentes, **caractérisé en ce que** le flux d'air régulé traverse le matériau de construction en direction de la pesanteur, contre la direction de la pesanteur ou/et sous un angle spécifique par rapport à la direction de la pesanteur.

5. Procédé selon l'une quelconque des revendications précédentes, **caractérisé en ce que** le point d'ébullition du liant liquide est inférieur ou supérieur à celui de l'eau distillée.
